# EUROPEAN PATENT APPLICATION

(11) **EP 4 837 720 A1**
(43) Date of publication of application: **11.11.2026**
(21) Application number: 24914954.3
(22) Date of filing: 18.10.2024
(51) Int. Cl.: B29C 48/07, B29C 48/305, B29C 48/355, B29C 48/88

(54) **NON-POLYVINYL CHLORIDE WOOD-PLASTIC PLATE DEFORMATION CONTROL METHOD AND APPLICATION**

(30) Priority: 02.01.2024 CN 202410004795
(71) Applicant: Hangzhou Print Flooring Technology Co., Ltd., Hangzhou, Zhejiang 311200 (CN)
(72) Inventor: YANG, Guocui, Hangzhou, Zhejiang 311200 (CN); LEI, Zhongshan, Hangzhou, Zhejiang 311200 (CN); DENG, Mengde, Hangzhou, Zhejiang 311200 (CN); HUANG, Donghui, Hangzhou, Zhejiang 311200 (CN); AO, Fangbing, Hangzhou, Zhejiang 311200 (CN); HUANG, Feng, Hangzhou, Zhejiang 311200 (CN)
(74) Representative: Serrano Irurzun, Javier
(86) International application number: PCT/CN2024/125740
(87) International publication number: WO 2025/145737

(57) **Abstract**

The present invention relates to the technical field of flooring manufacturing, and particularly relates to a method for controlling deformation of a non-polyvinyl chloride wood-plastic board and an application thereof. The method comprises outputting a non-polyvinyl chloride wood-plastic semi-finished board from an outlet, and performing traction on the semi-finished board through a traction roller assembly, such that a direction in which the semi-finished board is pulled by the traction roller assembly does not coincide with a direction of gravity acting on the semi-finished board itself, and an included angle therebetween is less than 90 degrees. By adjusting the conveying angle of the semi-finished board after being output from the outlet, the present application effectively overcomes the problems of shrinkage and warping that do not occur during extrusion of conventional board substrates using polyvinyl chloride as a raw material, and additionally and unexpectedly improves the mechanical strength, hardness, and wear resistance performance of the board.

## Description

### TECHNICAL FIELD

The present invention relates to the technical field of flooring manufacturing, and in particular to a method for controlling deformation of a non-polyvinyl chloride wood-plastic board and an application thereof.

### BACKGROUND ART

Flooring is an indispensable part of indoor and outdoor decoration, and has multiple functions such as comfort, aesthetics, thermal insulation, and sound insulation, playing a crucial role in improving the quality and comfort of indoor and outdoor environments. Currently, the flooring market exhibits a trend of rapid development, and consumer demand for flooring products is increasing year by year. With the improvement of people's living standards and changes in consumption concepts, higher requirements have been put forward for flooring types, quality, environmental protection performance, decorative effects, and other aspects, further promoting the development of the flooring industry. According to data from market research institutions, the market size of the flooring industry continues to expand, and the flooring market is expected to maintain stable growth in the coming years, particularly with continued growth in demand in the residential and commercial building sectors.

Polyvinyl chloride (PVC) artificial boards are one of the primary materials in the flooring industry and are highly favored due to their excellent performance and wide range of applications. PVC artificial boards possess characteristics such as wear resistance, water resistance, and corrosion resistance, thereby providing flooring with a long service life and excellent performance. They are widely used in various scenarios such as homes, commercial buildings, and outdoor venues.

In terms of homes, PVC flooring can simulate the texture and feel of solid wood flooring while also providing advantages such as water resistance and ease of cleaning, making it a preferred choice for many household decorations. In commercial buildings, PVC flooring has characteristics such as wear resistance, slip resistance, and ease of installation, making it suitable for floor decoration in high-traffic areas such as large shopping malls, office buildings, and public places. In outdoor venues, PVC flooring possesses weather resistance and waterproof performance, making it suitable for floor decoration in open-air playgrounds, terraces, gardens, and the like.

For example, patent CN112095967B discloses a multi-level synchronized embossed PVC panel with molded rounded edges, which comprises a UV paint layer, a PVC wear-resistant layer, a PVC decorative film layer, a PVC substrate board, and a PVC backing layer. The surface of the panel has synchronized embossed simulated three-dimensional textures, and rounded edges and locking structures are provided around the periphery thereof, thereby realizing mutual locking assembly between panels. In addition, patent CN114953665A discloses a preparation process for a PVC flooring, in which a PVC substrate layer, a PVC printing layer, and a PVC pre-coated film are stacked and subjected to a one-time lamination process to obtain a finished PVC flooring product.

However, although polyvinyl chloride artificial boards have been widely used in the flooring industry, certain defects and problems still exist. First, due to the structural characteristics of polyvinyl chloride, recycling and reuse thereof are relatively difficult, resulting in resource waste. Compared with other recyclable materials, polyvinyl chloride has a relatively low recycling utilization rate, thereby imposing certain pressure on the environment. Second, polyvinyl chloride artificial boards release harmful substances during production, use, and treatment processes, thereby posing potential risks to the environment and human health. For example, polyvinyl chloride releases harmful substances such as hydrogen chloride and dioxins, causing pollution to air and water quality and potentially leading to respiratory diseases and other health problems. This brings environmental and health-related pressures and challenges to the flooring industry.

In order to overcome the defects of polyvinyl chloride artificial boards, technicians have begun to seek non-polyvinyl chloride wood-plastic boards as alternative materials and have conducted related research and development work. Polyolefin materials (such as polyethylene, polypropylene, and the like) are considered to be a potential alternative to polyvinyl chloride artificial boards. Compared with polyvinyl chloride artificial boards, polyolefin-based wood-plastic boards possess recyclability and reusability, which helps reduce resource waste and environmental pollution. Polyolefin-based wood-plastic boards can be recycled and reprocessed through physical and chemical methods for manufacturing new wood-plastic boards or other plastic products, thereby reducing dependence on and exploitation of raw materials while reducing environmental pollution and resource waste. Such recyclable and reusable characteristics are consistent with the concepts of sustainable development and environmental protection, thereby promoting the green development of the flooring industry.

For example, patent CN108659333A provides a non-polyvinyl chloride surface covering, comprising a backing layer, an intermediate layer, and a transparent wear-resistant layer, wherein the transparent wear-resistant layer comprises a polyolefin, a polyolefin elastomer or a polyolefin plastomer, and processing aids. In addition, patent CN111267448A discloses a NON-PVC substrate-type 3D printed floor, comprising a NON-PVC substrate layer, a balance layer, and a solid wood layer, wherein a UV primer layer and a white UV paint layer are provided on the surface of the solid wood layer, and a printed pattern layer and an embossed effect layer are provided thereon.

However, during research on polyolefin-based wood-plastic boards, it was found that although polyolefin materials possess good physical properties and chemical stability, they exhibit relatively high thermal shrinkage and are prone to warping during the molding process of wood-plastic boards. At the same time, compared with polyvinyl chloride artificial boards, polyolefin materials exhibit a certain gap in wear resistance performance. Therefore, based on the above two defects, non-polyvinyl chloride wood-plastic boards prepared using polyolefin materials as raw materials still face certain obstacles in the flooring field. Accordingly, in order to overcome these problems, it is necessary to improve the board preparation methods and production apparatuses using polyolefin materials as raw materials, thereby improving the quality, stability, and environmental friendliness of non-polyvinyl chloride wood-plastic boards.

### SUMMARY OF THE INVENTION

The present invention is intended to overcome the defects in the prior art that non-polyvinyl chloride wood-plastic boards have a relatively high warpage rate during the molding process, resulting in unevenness and instability in the finally obtained flooring. Therefore, the present invention provides a method for controlling deformation of a non-polyvinyl chloride wood-plastic board and an application thereof so as to overcome the above deficiencies.

In order to achieve the above-mentioned objectives of the invention, the present invention is implemented through the following technical solutions:
In a first aspect, the present invention first provides a method for controlling deformation of a polyvinyl chloride wood-plastic board, characterized by at least comprising the following steps:
(S.1) providing an extruder and a mold adapted thereto, wherein the mold comprises an outlet for outputting a semi-finished board;
(S.2) providing a set of traction roller assemblies for traction shaping of the semi-finished board, wherein a traction inlet height of the traction roller assembly is lower than that of the outlet;
(S.3) outputting a non-polyvinyl chloride wood-plastic semi-finished board from the outlet, and performing traction on the semi-finished board through the traction roller assembly, such that a direction in which the semi-finished board is pulled by the traction roller assembly does not coincide with a direction of gravity acting on the semi-finished board itself, and an included angle therebetween is less than 90 degrees.

Preferably, the included angle between the direction in which the semi-finished board is pulled by the traction roller assembly and the direction of gravity acting on the semi-finished board itself is 30-60°.

Preferably, in step (S.3), the traction roller assembly comprises at least 3 traction rollers, such that during the process in which the semi-finished board is pulled by the traction roller assembly, the semi-finished board is compressed at least twice by adjacent traction rollers, and heat exchange occurs during the compression contact between the semi-finished board and the traction rollers, thereby reducing the temperature of the semi-finished board.

Preferably, step (S.3) further comprises a step of independently adjusting the temperature of each traction roller in the traction roller assembly, such that the internal temperature and the external temperature of the semi-finished board are consistent after the semi-finished board is output from the traction roller assembly.

Preferably, in step (S.3), the temperatures of the traction rollers in the traction roller assembly are sequentially increased along a conveying direction of the semi-finished board.

Preferably, a temperature difference between the temperature of the traction roller used for inputting the semi-finished board in the traction roller assembly and the temperature of the outlet is 10-15°C;
a temperature difference between the temperature of the traction roller used for outputting the semi-finished board in the traction roller assembly and the temperature of the outlet is ≤10°C.

Preferably, after step (S.3) is completed, step (S.4) is further included, comprising an intermediate treatment step in which the semi-finished board is suspended in a traction state and naturally cooled under ambient conditions.

Preferably, after the intermediate treatment step is completed, a step of tempering and shaping the semi-finished board is further included.

Preferably, the tempering and shaping temperature is 10-15°C higher than the temperature of the semi-finished board after the intermediate treatment step.

Preferably, in step (S.4), the semi-finished board is pulled by a set of traction mechanisms; the rotational speed of the traction mechanisms is higher than the rotational speed of the traction roller assembly.

Preferably, the semi-finished board comprises polyolefin, wood flour, stone powder, and processing aids.

Preferably, the polyolefin is any one or a combination of two or more selected from polyethylene, polypropylene, ethylene-vinyl acetate copolymer, ethylene-propylene copolymer, ethylene-acrylic acid or acrylate copolymer, poly-1-butene, and poly(4-methyl-1-pentene).

In a second aspect, the present invention further provides an application of the above-described method for controlling deformation of a non-polyvinyl chloride wood-plastic board in the preparation of a non-polyvinyl chloride wood-plastic board or a non-polyvinyl chloride flooring.

Compared with the prior art, the present application has the following beneficial effects:
(1) By adjusting the traction conveying angle of the semi-finished board after being output from the outlet, the present application enables the conveying direction of the semi-finished board from the outlet to the inlet of the traction roller assembly to not coincide with the direction of gravity acting on the semi-finished board itself, and the included angle therebetween is less than 90 degrees, thereby effectively overcoming the newly occurring problems of shrinkage and warping of non-polyvinyl chloride wood-plastic boards during the molding process;
(2) Through the above arrangement, the mechanical strength, hardness, and wear resistance performance of the board are additionally improved unexpectedly;
(3) The non-polyvinyl chloride wood-plastic boards produced by using the method described in the present application effectively improve the qualification rate of flooring products, thereby effectively reducing dependence on and exploitation of raw materials while reducing environmental pollution and resource waste.

### BRIEF DESCRIPTION OF THE DRAWINGS

FIG. 1 is a flow chart of one embodiment of the present invention.
FIG. 2 is a schematic diagram of preparing a semi-finished board using a preparation method in the prior art.
FIG. 3 is a schematic diagram of preparing a semi-finished board using the preparation method of the present invention.
FIG. 4 is a schematic diagram of preparing a semi-finished board using a traction roller assembly comprising two traction rollers.
FIG. 5 is a schematic diagram of preparing a semi-finished board using a traction roller assembly comprising four traction rollers.
FIG. 6 is a flow chart of another embodiment of the present invention.
FIG. 7 is a schematic diagram of steps (S.3)-(S.5).

Wherein: outlet 100, semi-finished board 200, traction roller assembly 300, traction roller 301, tempering and shaping equipment 400, and traction mechanism 500.

### DETAILED DESCRIPTION OF THE INVENTION

The present invention will be further described below in conjunction with specific embodiments. Those skilled in the art will be able to implement the present invention based on these descriptions. In addition, the embodiments of the present invention described below are generally only a part of the embodiments of the present invention rather than all embodiments thereof. Therefore, all other embodiments obtained by those skilled in the art based on the embodiments of the present invention without making any inventive effort shall fall within the scope of protection of the present invention.

### Embodiment

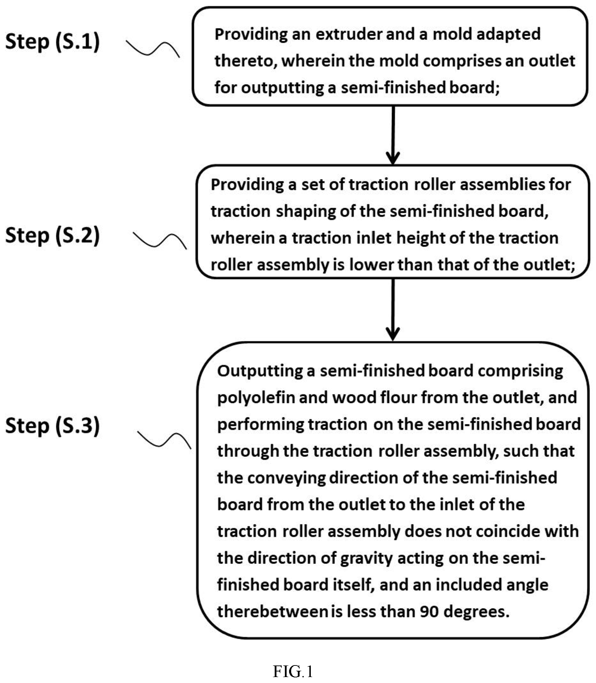

As shown in FIG. 1, in a first embodiment of the present invention, the present invention first provides a method for controlling deformation of a non-polyvinyl chloride wood-plastic board, which at least comprises the following steps:
(S.1) providing an extruder and a mold adapted thereto, wherein the mold comprises an outlet for outputting a semi-finished board;
(S.2) providing a set of traction roller assemblies for traction shaping of the semi-finished board, wherein a traction inlet height of the traction roller assembly is lower than that of the outlet;
(S.3) outputting a semi-finished board comprising polyolefin and wood flour from the outlet, and performing traction on the semi-finished board through the traction roller assembly, such that a direction in which the semi-finished board is pulled by the traction roller assembly does not coincide with a direction of gravity acting on the semi-finished board itself, and an included angle therebetween is less than 90 degrees.

In the prior art, for board substrates using polyvinyl chloride as a raw material (for example, SPC substrates and LVT substrates), the preparation process generally uses polyvinyl chloride as a polymer substrate material and stone powder is added thereto. Ultimately, the desired board is produced through an extrusion process. Since polyvinyl chloride is an amorphous polymer, its volumetric shrinkage before and after extrusion is relatively low. Therefore, during preparation of conventional polyvinyl chloride substrates, excessive consideration need not be given to warping caused by volumetric shrinkage. In addition, polyvinyl chloride has relatively strong polarity, and the melt obtained after mixing and melting with stone powder has relatively high viscosity. The semi-finished board obtained after the melt flows out from the mold and cools has relatively high hardness and maintains strong shape stability even under the action of external forces, making warping deformation difficult to occur.

In view of the above reasons, current board substrates using polyvinyl chloride as a raw material are generally prepared during extrusion by melting the material through an extruder and obtaining a semi-finished board through a horizontally arranged mold, followed by horizontal traction into a cooling mechanism for cooling and shaping. However, with continuously increasing environmental protection requirements, upgrading and replacing polyvinyl chloride materials has become increasingly urgent. Nevertheless, during the extrusion process of preparing novel polyolefin-based boards using conventional extrusion equipment, previously unforeseen technical problems have arisen. Specifically, polyolefin semi-finished boards produced using conventional extrusion equipment exhibit relatively large volumetric shrinkage and severe warping deformation, making them difficult to use in the preparation of non-polyvinyl chloride wood-plastic boards and non-polyvinyl chloride wood-plastic flooring.

In response to the above phenomenon, researchers conducted in-depth studies and found that the causes of severe warping deformation of non-polyvinyl chloride wood-plastic boards include at least the following aspects: (1) polyolefin materials (any one of polyethylene, polypropylene, ethylene-vinyl acetate copolymer, ethylene-propylene copolymer, ethylene-acrylic acid or acrylate copolymer, poly-1-butene, and poly(4-methyl-1-pentene)) have more regular molecular chain segments, resulting in crystallization properties significantly higher than those of conventional polyvinyl chloride, thereby causing volumetric shrinkage during crystallization; (2) when a polyolefin melt is extruded from a mold, the viscosity thereof is relatively low, and deformation readily occurs under the action of external forces (such as traction force and gravity); and (3) the influence of traction force and gravity causes non-uniform crystallization degrees of the polyolefin material at different positions, thereby further aggravating the occurrence of warping. In view of the above causes of warping, researchers proposed improvements in terms of raw material formulations, preparation and molding processes, and molding equipment.

The present application takes, as a starting point, a production method for a non-polyvinyl chloride wood-plastic board using polyolefin as a principal material, and aims to solve or alleviate the severe warping deformation problem caused by continuing to use preparation methods for polyvinyl chloride wood-plastic boards.

During routine experiments, the applicant unexpectedly found that, after extrusion molding of polyolefin-based non-polyvinyl chloride wood-plastic boards, subsequent traction and cooling steps have a significant influence on the crystallization behavior thereof, thereby affecting the deformation resistance of the semi-finished board.

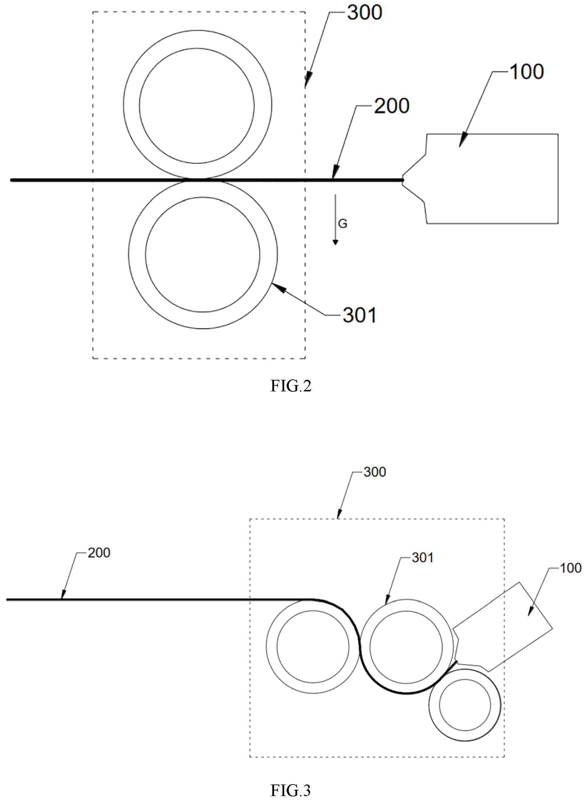

As shown in FIG. 2, the applicant found that after raw materials such as polyolefin raw materials, wood flour, and stone powder undergo melting and plasticization in an extruder and are extruded from the outlet 100 of the mold, the middle portion of the semi-finished board 200 tends to sag due to the action of gravity on the melt. If, at this time, the semi-finished board 200 is also subjected to a horizontal traction force during conveyance, the superposition of gravity and traction force, which act in different directions, causes the crystallization behavior at the center and edges of the semi-finished board to become inconsistent, thereby resulting in differences in crystallinity and crystal size between the center and edges of the semi-finished board 200 and ultimately causing warping in the width direction thereof. Note: in the present application, the length direction refers to the direction in which the semi-finished board 200 is conveyed under the traction force; the width direction refers to the direction on the surface of the semi-finished board 200 that is perpendicular to the length direction thereof; and the thickness direction refers to the direction perpendicular to the upper and lower planes of the semi-finished board 200.

As shown in FIG. 3, the present application creatively adjusts the included angle between the direction in which the semi-finished board 200 is pulled by the traction roller assembly 300 and the direction of gravity acting on the semi-finished board 200 itself to be less than 90 degrees. Through the above arrangement, the influence of gravity on the semi-finished board 200 in the thickness direction thereof is reduced, such that the influence of gravity in the width direction thereof becomes uniform, thereby allowing the crystallization behavior at various positions in the width direction to be more balanced and effectively reducing warping of the semi-finished board 200 in the width direction thereof.

In addition, the above arrangement also increases the resultant force acting on the semi-finished board 200 along the length direction thereof, thereby causing macromolecules, microcrystals, and other structures within the semi-finished board to undergo a pronounced orientation effect along the length direction thereof. This further accelerates the induction effect of the external force on the semi-finished board along the length direction thereof, ultimately increasing the crystallization rate and crystallinity of the semi-finished board, thereby preventing shrinkage and warping caused by changes in crystal form during subsequent cooling and storage processes.

Furthermore, since macromolecules, microcrystals, and other structures within the semi-finished board 200 are oriented under induction by external forces, the crystal structures thereof are always uniformly aligned in the length direction of the semi-finished board. Accordingly, the mechanical strength, hardness, and wear resistance performance of the semi-finished board can be significantly improved.

However, the direction in which the semi-finished board 200 is pulled along the outlet 100 by the traction roller assembly 300 and the direction of gravity acting on the semi-finished board itself are not necessarily better as the included angle becomes smaller. For example, in the extreme case where the two directions coincide, the resultant force acting on the semi-finished board along the length direction thereof is greatly increased, thereby potentially causing non-uniformity in the thickness of the semi-finished board. Specifically, flow marks and wave patterns may be generated.

In order to investigate the relationship between the traction direction of the traction roller assembly 300 and the warpage degree of the finally obtained semi-finished board 200, in the present embodiment, semi-finished boards 200 prepared at different traction angles of the traction roller assembly 300 were tested. The test results are shown in Table 1 below.

**Table 1**

| Item | Group 1 | Group 2 | Group 3 | Group 4 | Group 5 | Group 6 | Group 7 | Group 8 |
|---|---|---|---|---|---|---|---|---|
| Included angle between the traction direction of the traction roller assembly and the horizontal plane | 0° | 10° | 20° | 30° | 45° | 60° | 80° | 90° |
| Warpage (mm/m) | 0.62 | 0.59 | 0.43 | 0.28 | 0.16 | 0.19 | 0.26 | 0.25 |
| Flexural strength (MPa) | 17.2 | 17.2 | 17.3 | 17.6 | 17.9 | 18.1 | 18.2 | 18.2 |
| Shore hardness | 54 | 54 | 55 | 58 | 60 | 61 | 62 | 62 |
| Other conditions | Uniform thickness | Uniform thickness | Uniform thickness | Uniform thickness | Uniform thickness | Uniform thickness | Occasional flow marks | Obvious flow marks |
| Extrusion conditions | Output outlet temperature: 150°C; temperature of No. 1 traction roller: 138°C; temperature of No. 2 traction roller: 138°C; temperature of No. 3 traction roller: 145°C. | | | | | | | |
| Board formulation (example) | Polypropylene particles 47.5 wt%, wood flour 15 wt%, stone powder 35 wt%, antioxidant 1 wt%, lubricant 1 wt%, ultraviolet-resistant agent 0.5 wt% | | | | | | | |
| Test methods | GB/T 15036.2-2009, GB/T 24137-2009 | | | | | | | |

It can be seen from the above test results that, as the included angle between the traction direction of the traction roller assembly 300 and the horizontal plane changes, the influence of gravity on the warpage of the semi-finished board 200 can be effectively reduced. When the included angle between the traction direction of the traction roller assembly 300 and the horizontal plane is 0°, the semi-finished board 200 exhibits the greatest warpage, reaching 0.62 mm/m. As the included angle between the traction direction of the traction roller assembly 300 and the horizontal plane increases, the warpage gradually decreases. When the included angle between the traction direction of the traction roller assembly 300 and the horizontal plane is ≥30°, the warpage of the semi-finished board 200 can reach a level of less than 0.3 mm/m. However, the included angle between the outlet 100 and the horizontal plane is not necessarily better as it becomes larger. When the included angle between the traction direction of the traction roller assembly 300 and the horizontal plane is 80°, flow marks have already appeared on the surface of the semi-finished board 200, and when the traction direction of the traction roller assembly 300 is perpendicular to the horizontal plane (i.e., the included angle is 90°), obvious flow marks are present. Therefore, considering both the warpage and flow mark conditions of the semi-finished board, when the included angle between the direction in which the semi-finished board 200 is pulled by the traction roller assembly 300 and the direction of gravity acting on the semi-finished board 200 itself is 30-60°, the prepared semi-finished board 200 exhibits the most excellent performance.

Therefore, in summary, the present embodiment effectively overcomes the newly occurring problems of shrinkage and warping of non-polyvinyl chloride wood-plastic boards during the molding process by adjusting the angular relationship between the direction in which the semi-finished board 200 is pulled by the traction roller assembly 300 and the direction of gravity acting on the semi-finished board 200 itself. At the same time, the mechanical strength, hardness, and wear resistance performance of the board are additionally improved unexpectedly.

As shown in FIG. 3, in some preferred embodiments, the traction roller assembly 100 comprises at least 3 traction rollers 301, such that during the process in which the semi-finished board 200 is pulled by the traction roller assembly 300, the semi-finished board 200 is compressed at least twice by adjacent traction rollers 301, and heat exchange occurs during the compression contact between the semi-finished board and the traction rollers, thereby reducing the temperature of the semi-finished board.

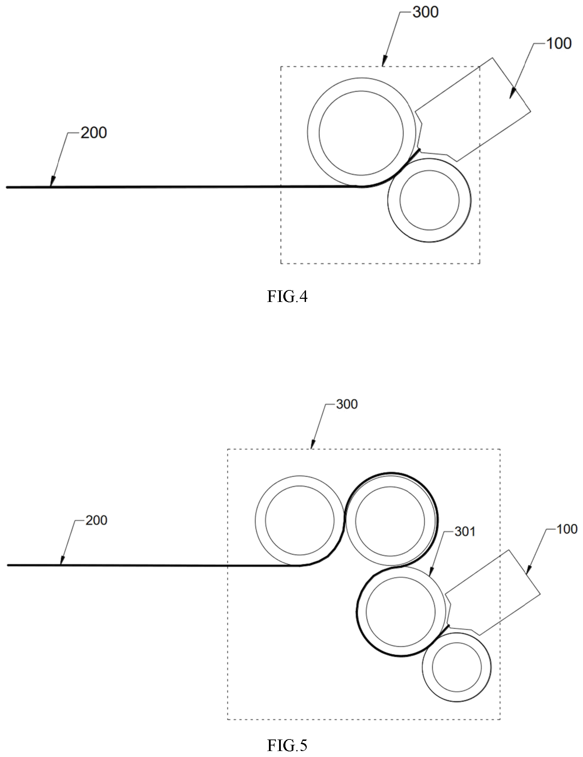

In order to verify the influence of the number of traction rollers 301 in the traction roller assembly 300 on the warpage of the semi-finished board 200, traction roller assemblies 300 as shown in FIGS. 4 and 5 were respectively provided. Wherein, the traction roller assembly 300 shown in FIG. 4 comprises only two traction rollers 101, such that the semi-finished board 200 is compressed once by adjacent traction rollers 301 during the process in which the semi-finished board 200 is pulled by the traction roller assembly 300. The traction roller assembly 300 shown in FIG. 5 comprises only four traction rollers 301, such that the semi-finished board 200 is compressed three times by adjacent traction rollers 301 during the process in which the semi-finished board 200 is pulled by the traction roller assembly 300.

The test results are shown in Table 2 below.

**Table 2**

| Item | Group 1 | Group 2 | Group 3 |
|---|---|---|---|
| Number of traction rollers in the traction roller assembly | 2 | 3 | 4 |
| Warpage (mm/m) | 0.69 | 0.16 | 0.15 |
| Other conditions | Non-uniform thickness | Uniform thickness | Uniform thickness |
| Extrusion conditions | Outlet temperature: 150°C; temperature of No. 1 traction roller: 138°C; temperature of No. 2 traction roller: 138°C; temperature of No. 3 traction roller: 145°C; the included angle between the traction direction of the traction roller assembly and the horizontal plane is 45°. | | |
| Board formulation (example) | Polypropylene particles 47.5 wt%, wood flour 15 wt%, stone powder 35 wt%, antioxidant 1 wt%, lubricant 1 wt%, ultraviolet-resistant agent 0.5 wt% | | |
| Test method | GB/T 15036.2-2009 | | |

It can be seen from the above test results that, as the number of traction rollers in the traction roller assembly 300 increases, the semi-finished board 200 is subjected to a greater number of compression events during the process in which the traction roller assembly 300 pulls the semi-finished board 200. As a result, the release of internal stress within the semi-finished board 200 becomes more effective, thereby reducing the degree of warpage of the semi-finished board 200.

In addition to the included angle between the outlet 100 and the horizontal plane having a regulating effect on the warpage of the semi-finished board 200, the applicant has also found that the temperatures of the respective traction rollers 301 in the traction roller assembly 300 play an auxiliary role in deformation control of the semi-finished board 200. The reason is that, during the process in which the material melt is output through the outlet 100 of the mold, the surface temperature of the semi-finished board 200 rapidly decreases, while the middle portion thereof remains at a relatively high temperature. Therefore, due to the relatively large temperature difference between the interior and exterior of the semi-finished board 200, significant changes occur in the crystallinity of the interior and exterior portions of the semi-finished board 200. Specifically, the polymer crystals on the surface of the semi-finished board 200 have a relatively small particle size, whereas the polymer crystals inside the semi-finished board 200 are relatively larger. At the same time, due to the sudden decrease in temperature at the surface of the semi-finished board 200, a portion of the polymer chain segments are fixed by cooling before crystallization can occur, thereby causing differences in the crystallinity of the polymers between the interior and exterior of the semi-finished board 200 and further affecting the stability of the semi-finished board 200.

In response to the above problem, the present application independently adjusts the temperature of each traction roller 301 in the traction roller assembly 300, such that the internal temperature and external temperature of the semi-finished board 200 are consistent after the semi-finished board 200 is output from the traction roller assembly 300, thereby completely changing the original crystallization process of the polymer. The applicant has found that by gradually increasing the temperatures of the traction rollers 301 in the traction roller assembly 300, the crystallinity of the polymers inside and outside the semi-finished board 200 can be increased, and precise control of the polymer crystallization process can be achieved, thereby ensuring uniform crystallization during conveyance, improving product quality and consistency, and reducing material non-uniformity. This helps improve the strength and rigidity of the semi-finished board 200, making it more suitable for specific application requirements. In addition, by gradually increasing the temperatures of the traction rollers 301 in the traction roller assembly 300, an annealing step can be performed on the semi-finished board, thereby reducing residual stress within the semi-finished board 200. The principle thereof is that temperature changes can promote rearrangement of polymer molecules, reduce residual stress in the board, and improve the stability and durability of the board.

Under some preferred conditions of the present embodiment, the temperature difference between the traction roller 301 used for inputting the semi-finished board 200 in the traction roller assembly 300 and the temperature of the outlet 301 may be 10-15°C, while the temperature difference between the traction roller 301 used for outputting the semi-finished board 200 in the traction roller assembly 300 and the temperature of the outlet 100 may be ≤10°C. Such an arrangement enables the temperatures of the traction rollers 301 of the traction roller assembly 300 to be relatively close to the temperature of the semi-finished board 200 output from the outlet 100, thereby effectively avoiding non-uniform crystallization caused by rapid cooling of the semi-finished board 200, further improving the stability of the semi-finished board 200 and reducing the warpage rate thereof.

In order to investigate the relationship between the temperature of the traction roller assembly 300 and the warpage of the finally obtained semi-finished board 200, in the present embodiment, the temperatures of the respective traction rollers 301 in the traction roller assembly 300 were individually set, and the resulting semi-finished boards 200 were tested. The traction rollers 301 in the traction roller assembly 300 were sequentially designated as a No. 1 traction roller, a No. 2 traction roller, and a No. 3 traction roller along the conveying direction of the semi-finished board 200. The test results are shown in Table 3 below.

**Table 3**

| Item | | Group 1 | Group 2 | Group 3 |
|---|---|---|---|---|
| Included angle between the outlet and the horizontal plane | | 45° | 45° | 45° |
| Outlet temperature | | 150°C | 150°C | 150°C |
| Temperature of traction roller assembly(°C) | No. 1 traction roller | 138°C | 145°C | 120°C |
| | No. 2 traction roller | 138°C | 140°C | 125°C |
| | No. 3 traction roller | 145°C | 135°C | 130°C |
| Warpage (mm/m) | | 0.16 | 0.28 | 0.39 |
| Board formulation (example) | | Polypropylene particles 47.5 wt%, wood flour 15 wt%, stone powder 35 wt%, antioxidant 1 wt%, lubricant 1 wt%, ultraviolet-resistant agent 0.5 wt% | | |
| Test method | | GB/T15036.2-2009 | | |

It can be seen from the above test results that, as the temperatures of the respective traction rollers 301 in the traction roller assembly 300 are changed, the warpage of the finally obtained semi-finished board 200 is correspondingly adjusted.

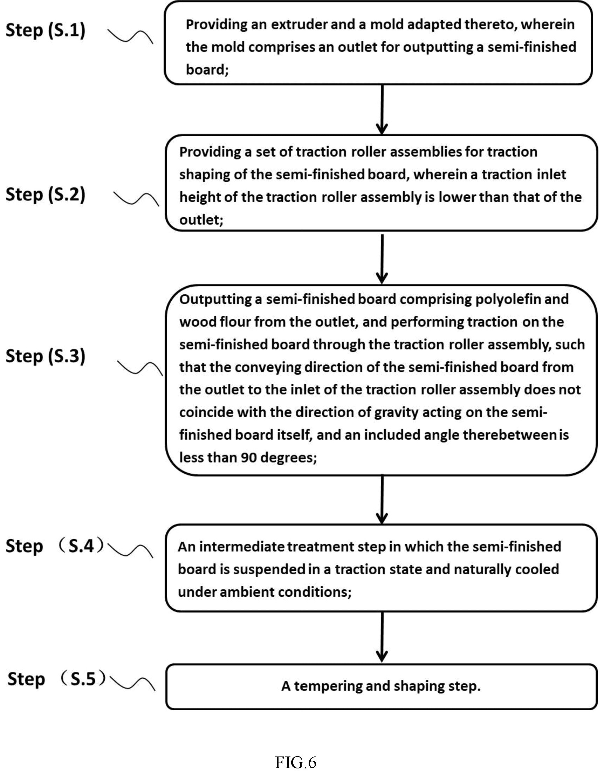

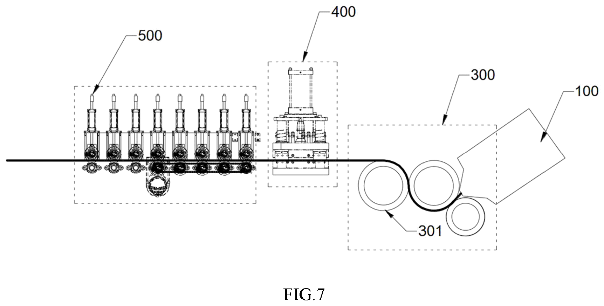

As shown in FIGS. 6 and 7, in some preferred embodiments, after completion of step (S.3), step (S.4) is further included, namely, an intermediate treatment step in which the semi-finished board is suspended under the traction of a set of traction mechanisms 500 and is naturally cooled under ambient conditions. Wherein, the rotational speed of the traction mechanisms is higher than the rotational speed of the traction roller assembly.

In addition, after completion of the intermediate treatment step, a step of passing the semi-finished board through the tempering and shaping equipment 400 for tempering and shaping (i.e., step (S.5) in FIG. 6) is further included, thereby further eliminating residual stress within the semi-finished board and further reducing the warpage of the semi-finished board 200 after the tempering and shaping treatment. However, the tempering and shaping temperature also has a certain relationship with the warpage of the semi-finished board 200. The applicant has found that only when the tempering and shaping temperature is within a certain range does it have a relatively significant effect on the release of residual stress. If the temperature is excessively low or excessively high, the improvement in warpage is not obvious and may even produce the opposite effect. The relevant test results are shown in Table 4 below.

**Table 4**

| Item | Group 1 | Group 2 | Group 3 | Group 4 | Group 5 |
|---|---|---|---|---|---|
| Temperature after step (S.3) | 128°C | | | | |
| Temperature after step (S.4) | 106°C | | | | |
| Tempering and shaping temperature | 100°C | 116 | 118 | 121 | 130 |
| Warpage (mm/m) | 0.16 | 0.14 | 0.13 | 0.13 | 0.19 |
| Board formulation (example) | Polypropylene particles 47.5 wt%, wood flour 15 wt%, stone powder 35 wt%, antioxidant 1 wt%, lubricant 1 wt%, ultraviolet-resistant agent 0.5 wt% | | | | |
| Test method | GB/T15036.2-2009 | | | | |

The specific embodiments described herein are merely illustrative of the spirit of the present invention. Those skilled in the art to which the present invention pertains may make various modifications or additions to the described specific embodiments, or may substitute equivalent manners therefor, without departing from the spirit of the present invention or exceeding the scope defined by the appended claims.

## Claims

1. A method for controlling deformation of a non-polyvinyl chloride wood-plastic board, comprising at least the following steps:
(S.1) providing an extruder and a mold adapted thereto, wherein the mold comprises an outlet for outputting a semi-finished board;
(S.2) providing a traction roller assembly for traction shaping of the semi-finished board, wherein a traction inlet height of the traction roller assembly is lower than that of the outlet; and
(S.3) outputting a non-polyvinyl chloride wood-plastic semi-finished board from the outlet, and pulling the semi-finished board by the traction roller assembly, such that a direction in which the semi-finished board is pulled by the traction roller assembly does not coincide with a direction of gravity acting on the semi-finished board itself, and an included angle therebetween is less than 90°.

2. The method according to claim 1, wherein the included angle between the direction in which the semi-finished board is pulled by the traction roller assembly and the direction of gravity acting on the semi-finished board itself is 30°-60°.

3. The method according to claim 1 or 2, wherein in step (S.3), the traction roller assembly comprises at least three traction rollers, such that during a process in which the semi-finished board is pulled by the traction roller assembly, the semi-finished board is compressed at least twice by adjacent traction rollers, and heat exchange occurs during compression contact between the semi-finished board and the traction rollers, thereby reducing a temperature of the semi-finished board.

4. The method according to claim 3, wherein step (S.3) further comprises independently adjusting temperatures of the traction rollers in the traction roller assembly, such that an internal temperature and an external temperature of the semi-finished board are consistent after the semi-finished board is output from the traction roller assembly.

5. The method according to claim 4, wherein in step (S.3), temperatures of the traction rollers in the traction roller assembly are sequentially increased along a conveying direction of the semi-finished board.

6. The method according to claim 5, wherein:
a temperature difference between a temperature of the traction roller used for inputting the semi-finished board in the traction roller assembly and a temperature of the outlet is 10-15°C; and
a temperature difference between a temperature of the traction roller used for outputting the semi-finished board in the traction roller assembly and the temperature of the outlet is less than or equal to 10°C.

7. The method according to claim 1, wherein after completion of step (S.3), the method further comprises step (S.4), comprising an intermediate treatment step in which the semi-finished board is suspended in a traction state and naturally cooled under ambient conditions.

8. The method according to claim 7, wherein after completion of the intermediate treatment step, the method further comprises tempering and shaping the semi-finished board.

9. The method according to claim 8, wherein a tempering and shaping temperature is 10-15°C higher than a temperature of the semi-finished board after the intermediate treatment step.

10. The method according to claim 7, 8, or 9, wherein in step (S.4):
the semi-finished board is pulled by a set of traction mechanisms; and
the rotational speed of the traction mechanisms is higher than the rotational speed of the traction roller assembly.

11. The method according to claim 1, wherein the semi-finished board comprises polyolefin, wood flour, stone powder, and processing aids.

12. The method according to claim 11, wherein the polyolefin is any one or a combination of two or more selected from the group consisting of polyethylene, polypropylene, ethylene-vinyl acetate copolymer, ethylene-propylene copolymer, ethylene-acrylic acid or acrylate copolymer, poly-1-butene, and poly(4-methyl-1-pentene).

13. Use of the method according to any one of claims 1-12 in preparation of a non-polyvinyl chloride wood-plastic board or a non-polyvinyl chloride flooring.
